# EUROPEAN PATENT SPECIFICATION

(11) **EP 2 890 558 B1**
(45) Date of publication and mention of the grant of the patent: **09.11.2016**
(21) Application number: 13759949.4
(22) Date of filing: 28.08.2013
(51) Int. Cl.: B32B 15/08, B32B 15/085, B32B 15/09, B32B 15/20, B32B 27/10, B32B 27/32, B32B 27/34, B32B 27/36

(54) **FILM BARRIER TO ISOCYANATE MONOMER MIGRATION**
BARRIEREFOLIE GEGEN ISOCYANATMONOMERMIGRATION
FILM BARRIÈRE À LA MIGRATION DE MONOMÈRE ISOCYANATE

(30) Priority: 31.08.2012 US 201261695679 P; 31.08.2012 US 201261695654 P
(43) Date of publication of application: 08.07.2015
(73) Proprietor: Dow Global Technologies LLC, Midland, MI 48674 (US); Rohm and Haas Company, Philadelphia, PA 19106 (US)
(72) Inventor: CHEN, Xuming, Pearland, TX 77584 (US); MCGEE, Robert, L., Midland, MI 48642 (US); VIETTI, David, E., Cary, IL 60013 (US); MIYAKE, Kevin, Tower Lakes, IL 60010 (US); BRINKMAN, Larry, F., Woodstock, IL 60098 (US)
(74) Representative: Boult Wade Tennant
(86) International application number: PCT/US2013/057023
(87) International publication number: WO 2014/036106

(56) References cited:
- WO-A1-98/02303
- WO-A1-2012/142148
- WO-A1-2013/043635
- WO-A2-2013/043652
- JP-A- 2011 016 232
- US-A- 6 074 755
- US-A1- 2010 010 156
- US-B2- 6 630 237

## Description

### BACKGROUND OF THE INVENTION

Many goods, including foods, are packaged in multilayer films. Depending upon their structure and composition, these films can provide many desirable qualities such as strength, flexibility, optics, printability, a barrier to oxygen and/or water, and low cost. The individual layers of these multi-layer films can be joined together by a number of different techniques including heat lamination, various coating technologies and, of course, adhesives. For example, see International Publications WO 2013/043635 and WO2013/043652.

One popular and frequently used class of adhesives for joining two layers of a multi-layer film structure is polyurethane. For example, see US 6 630 237 B2 and JP2011016232 A. In two-component curable polyurethane adhesives, one component is an isocyanate group containing component and the other component is a component that contains one or more compounds with plural active hydrogen. The two-component adhesive is prepared by mixing the two components together, and the mixture is then applied to two or more substrates.

Some two-component adhesive formulations contain one or more monomeric, aromatic isocyanate compounds, which are usually di-functional, and one or more polyols. Such formulations are capable of undergoing chemical reactions that form urethane polymers, and these reactions are typically useful curing reactions. The monomeric, aromatic isocyanates react to form polymers and/or crosslinks that strengthen the adhesive bond.

Even though the adhesive is sufficiently cured to develop good bond strength, some monomeric isocyanate compounds may be present in the bonded assembly. The presence of monomeric isocyanate compounds is considered to be undesirable, since these compounds are considered to be both toxic and reactive. Also, these compounds are capable of reacting with water to form amines. For example, excess monomeric isocyanate may react with water (for example, trapped water formed during the coating of the adhesive, or water from an atmosphere under high humidity) to form a primary amine. Such amines are considered to be undesirable. Among such amines, primary aromatic amines (PAAs) are considered especially undesirable. For food containers, the contact between the container and the food should not result in appreciable amounts of PAAs in the food.

### SUMMARY OF THE INVENTION

The invention provides a multilayer film comprising at least two layers A2 and B:
A2. A first film layer A2 formed from a composition A2 comprising an anhydride functionalized ethylene-based polymer and a linear low density polyethylene; and
B. A second film layer B formed from a composition B comprising at least one isocyanate.

In one embodiment the invention is an article comprising a multilayer film as described above.

### DETAILED DESCRIPTION OF THE PREFERRED EMBODIMENT

### Overview

Flexible food packaging generally consists of several layers of films laminated together by adhesives. The outer layer is often a reverse printed film like a film comprising polyethylene terephthalate (PET). The packaging structure may also include barrier layers made from aluminum, metalized films or other films that prevent air and moisture from getting in or out of the food. The innermost layer is usually a polyolefin, e.g., polyethylene, sealant film that serves to heat seal the edges of the package. Polyurethane adhesives are commonly used to laminate these various film layers together.

Curing the adhesive may take 8-24 hours, and during this time, further processing of the film is typically on hold. This further processing typically includes slitting or sealing to make bags or pouches. An additional 5-14 days may be required to completely react certain isocyanates and to ensure that there will not be appreciable amounts of PAA's that could migrate into the package contents. This invention allows for the shortening of this hold time for PAA decay, or the time for building bond strength, to allow further processing, and this is advantageous for the manufacturers of food containers. The invention allows for both sufficient pot life for processing at elevated temperature the polymer from which the film is made, i.e., the polymer does not build viscosity too quickly so as to interfere with processing, but it cures quickly at ambient temperature. The requirement for pot life limits the use of catalysts in the adhesive to accelerate curing.

It has been discovered that certain components in the sealant film will accelerate curing and consumption of PAA. One approach is to have OH or other NCO-reactive functionality present in the sealant film. This can complete the reaction of NCO in the adhesive, with less dependence on the presence of ambient moisture and the variability caused by humidity.

The ethylene-based films can be constructed with several layers of slightly differing composition. The sealant films can be mono- or multilayer. For example, a five-layer polyethylene film can be constructed so that functional groups with active hydrogens (i.e. hydrogens attached to oxygen, nitrogen or sulfur) or anhydride functional groups are concentrated on or near the surface of the layer in direct contact with the PU adhesive. Inner layers, i.e., layers not in direct contact with the PU adhesive, can provide additional functionality or barriers to further reduce moisture, air, PAA or isocyanate monomer migration through the sealant film. The films may also contain additives or functionality to improve processing (e.g. slip additives) or sealing.

Various functional groups can be incorporated into the sealant film to react with isocyanate or to bind PAA and prevent it from migrating into the packaged food. Such functional groups include hydroxyl, amine, anhydride, carboxylic acid, etc. We have found that PE resins with anhydride groups are effective in reducing the PAA observed, especially in the first days of testing. Even though OH-groups are not expected to bind amines like a carboxylic acid/anhydride functionality, it has been discovered that the OH-groups work surprisingly well in accelerating the reduction of PAA observed in laminate extracts. The anhydride and OH-functionality may be bound to the film, as with the OH-functionalized ethylene-based polymer resins (Scheme 1, US 2010/0143651 A1).

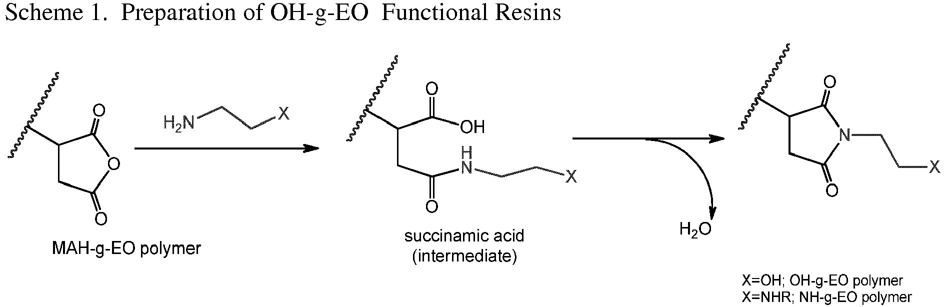

Also, ethylene vinyl alcohol (EVOH) resins have OH-functionality, but these do not adhere well to PE resins if vinyl alcohol concentration is too high. However, it has been discovered that a blend of EVOH and OH functional polyolefin does form a layer that can be coextruded with PE, and the blended layer adheres to the PE layers as indicated by the heat seal peel strength. These OH-functional resins provide a much faster drop in extractable PAA. When these films are laminated with a solvent-based adhesive, the green bonds (T-peel bonds measured within a few minutes of lamination) are significantly improved.

### Embodiments

The invention provides a multilayer film comprising at least two layers A2 and B:
A2. A first film layer A2 formed from a composition A2 comprising an anhydride functionalized ethylene-based polymer and a linear low density polyethylene; and
B. A second film layer B formed from a composition B comprising at least one isocyanate.

In one embodiment, the Layer A2 is in contact with Layer B.

In one embodiment, the anhydride functionalized ethylene-based polymer of composition A2 is formed from an ethylene-based polymer that has a density from 0.87 to 0.96 g/cc and a melt index (I₂) from 0.1 to 1,000 g/10min, further from 0.5 to 200 g/10 min, further from 1 to 50 g/10 min.

In one embodiment, the anhydride functionalized ethylene-based polymer comprises from 1 wt% to 15 wt%, further from 1.5 wt% to 10 wt%, further from 2.0 wt% to 5.0 wt%, of anhydride groups, based on the weight of the polymer.

In one embodiment, the anhydride functionalized ethylene-based polymer of composition A2 is formed from an ethylene/α-olefin interpolymer, and further an ethylene/α-olefin copolymer. Suitable α-olefins include C3-C10 α-olefins, and further propylene, butene, hexene and octene.

In one embodiment, the anhydride functionalized ethylene-based polymer of composition A2 further comprises an imide group.

In one embodiment, the composition A2 further comprises an EVOH.

In one embodiment, the composition A2 comprises less than 50 wt% EVOH based on the weight of composition A2.

In one embodiment, the composition A2 further comprises an ethylene-based polymer. In a further embodiment, the ethylene-based polymer is an ethylene/α-olefin interpolymer. In a further embodiment, composition A2 further comprises an ethylene/α-olefin copolymer. Suitable α-olefins include C3-C10 α-olefins, and further propylene, butene, hexene and octene.

In one embodiment, first film layer A2 is an exterior film layer, and the anhydride functionalized ethylene-based polymer has a melt index (I2) greater than or equal to 5 g/10 min. In a further embodiment, the anhydride functionalized ethylene-based polymer has a melt index (I2) from 5 to 50 g/10 min, further from 5 to 20 g/10 min, further from 5 to 15 g/10 min.

The anhydride functionalized ethylene-based polymer may comprise a combination of two or more embodiments as described herein.

In one embodiment, the film layer B comprises a two component polyurethane (PU) adhesive.

In one embodiment, the film layer B comprises a one component PU adhesive.

In one embodiment, the multilayer film comprises at least three layers.

In one embodiment, the multilayer further comprising a film layer C that is in contact with film layer B. in a further embodiment, the film layer C is formed from one of the following: polyethylene terephthalate (PET) or metal foil.
In one embodiment, the multi-layer film, according to one or more embodiments described herein, consists essentially of Layer A2 and Layer B.

In one embodiment the multilayer film comprises at least 3 layers.

In one embodiment the multilayer film comprises at least 5 layers.

In one embodiment the anhydride functionalized ethylene-based polymer of composition A2 is formed from HDPE, LDPE, LLDPE, homogeneously branched linear ethylene/α-olefin interpolymers, homogeneously branched substantially linear ethylene/α-olefin interpolymers, or a combination of two or more of these ethylene-based polymers.

In one embodiment, the multi-layer film layer comprises a layer A2 formed from composition A2, and one or more additional layers formed from a composition other than composition A, e.g., composition A with one or both of a hydroxyl-functionalized ethylene-based polymer and a secondary amine-functionalized ethylene-based polymer.

In one embodiment the anhydride functionalized ethylene-based polymer of composition A2, is formed from an ethylene-based polymer that has a density from 0.87 to 0.96 g/cc, or from 0.89 to 0.95 g/cc, or from 0.90 to 0.94 g/cc, or from 0.90 to 0.93 g/cc; and a melt index (I₂) from 0.1 to 1,000 g/10min, or from 0.1 to 500 g/10min, or from 0.5 to 50 g/10min, or from 1 to 10 g/10 min, or from 2 to 0 5 g/10min. In a further embodiment the anhydride functionalized ethylene-based polymer of composition A2 is formed from an ethylene/α-olefin interpolymer, and further embodiment it formed from an ethylene/α-olefin copolymer.

In one embodiment the anhydride functionalized ethylene-based polymer of composition A2 is formed from a homogeneously branched substantially linear ethylene/α-olefin ("EAO") interpolymer, and further a copolymer. In a further embodiment, the interpolymer, and further copolymer, has a processing rheology ratio ("PRR"), prior to functionalization, of 4 to 70

In one embodiment the anhydride functionalized ethylene-based polymer of composition A2 further comprises an imide group.

In one embodiment composition A2 further comprises EVOH.

In one embodiment EVOH comprises less than 50 wt% of composition A2.

In one embodiment film layer B comprises a layer B formed from composition B, and one or more additional layers formed from a composition other than composition B.

In one embodiment the isocyanate of composition B is at least one of an aromatic, aliphatic, and cycloaliphatic diisocyanates.

In one embodiment the isocyanate of composition B is a methylenebis(phenyl isocyanate) including the 4,4'-isomer, the 2,4'-isomer, and mixtures thereof, and methylenebis(cyclohexyl isocyanate), inclusive of its various isomers.

In one embodiment, the multilayer film structure comprises a layer C in contact with film layer B.

In one embodiment, layer C comprises a polyolefin, e.g., polyethylene, polypropylene, etc.; polyester, e.g., polyethylene terephthalate (PET); nylon; a metal foil or metallized plastic film; or nylon.

The invention also provides an article comprises a multilayer film according to one or more embodiments described herein.

In one embodiment the articles of the previous embodiments are food containers. In a further embodiment, the articles are pouches for the holding and/or storage of food.

In one embodiment film layer A2 is adjacent to a perishable material.

In one embodiment the perishable material is a food product or a pharmaceutical product.

In one embodiment the multilayer film comprises at least three layers in which one layer is made from composition A2, one layer is a plastic film, metal foil or other substrate, and the two layers are joined by a third layer comprising a PU adhesive.

In one embodiment the multilayer film comprises at least five layers in which one layer is made from composition A2, three layers are independently a plastic film (which can be a plastic film made from composition A), metal foil or other substrate, and an adhesive layer to join a layer made from composition A to anyone of the other layers.

A multilayer film may comprise a combination of two or more embodiments as described herein.

An inventive article may comprise a combination of two or more embodiments as described herein.

Composition A2 may comprise a combination of two or more embodiments as described herein.

Composition B may comprise a combination of two or more embodiments as described herein.

Film layer A2 may comprise a combination of two or more embodiments as described herein.

Film layer B may comprise a combination of two or more embodiments as described herein.

### Ethylene-Based Polymers

Examples of suitable polyolefin polymers include high density polyethylene (HDPE), low density polyethylene (LDPE), linear low density polyethylene (LLDPE), homogeneously branched linear ethylene/.alpha.-olefin interpolymers or homogeneously branched substantially linear ethylene/.alpha.-olefin interpolymers, and combinations thereof.

The ethylene/α-olefin interpolymers typically have comonomer(s) incorporation in the final polymer greater than 2 weight percent, more typically greater than 5 weight percent, based on the total weight of polymerizable monomers. The amount of comonomer(s) incorporation can be greater than 10 weight percent, and can even be greater than 15 or 20 weight percent, based on the total weight of polymerizable monomers.

Comonomers include, but are not limited to, propylene, isobutylene, 1-butene, 1-pentene, 1-hexene, 3-methyl-1-pentene, 4-methyl-1-pentene, and 1-octene, non-conjugated dienes, polyenes, butadienes, isoprenes, pentadienes, hexadienes (for example, 1,4-hexadiene), octadienes, styrene, halo-substituted styrene, alkyl-substituted styrene, tetrafluoroethylenes, vinylbenzocyclobutene, naphthenics, cycloalkenes (for example, cyclopentene, cyclohexene, cyclooctene), and mixtures thereof. Typically and preferably, the ethylene is copolymerized with one C₃-C₂₀ α-olefin. Preferred comonomers include propene, 1-butene, 1-pentene, 1-hexene, 1-heptene and 1-octene, and more preferably include propene, 1-butene, 1-hexene and 1-octene.

Illustrative interpolymers include ethylene/propylene (EP) copolymers, ethylene/butene (EB) copolymers, ethylene/hexene (EH) copolymers, ethylene/octene (EO) copolymers, ethylene/α-olefin/diene (EAODM) interpolymers, such as ethylene/propylene/diene (EPDM) interpolymers and ethylene/propylene/octene terpolymers. Preferred copolymers include EP, EB, EH and EO polymers.

The homogeneously branched linear ethylene/α-olefin interpolymers or homogeneously branched substantially linear ethylene/α-olefin interpolymers of this invention typically have a melt index ("I₂") from 0.01 g/10 min to 30 g/10 min, more typically from 0.1 g/10 min to 20 g/10 min, and even more typically from 0.1 g/10 min to 15 g/10 min.

In one embodiment, the ethylene-based polymer is a homogeneously branched substantially linear ethylene/α-olefin ("EAO") interpolymer which contain long chain branching, as compared to linear (short chain branches or no branches) ethylene/α-olefin interpolymers. The "long-chain branching" ("LCB") means a chain length that exceeds that of a short chain that results from incorporation of the α-olefin into the backbone of an ethylene/α-olefin polymer. In another embodiment, the ethylene/α-olefin interpolymers are prepared from at least one catalyst that can form long chain branches within the interpolymer backbone.

LCB polymers are disclosed in USP 5,272,236, in which the degree of LCB is from 0.01 LCB/1000 carbon atoms to 3 LCB/1000 carbon atoms, and in which the catalyst is a constrained geometry catalyst. According to P. Doerpinghaus and D. Baird, in The Journal of Rheology, 47(3), pp 717-736 May/June 2003, "Separating the Effects of Sparse Long-Chain Branching on Rheology from Those Due to Molecular Weight in Polyethylenes," free radical processes, such as those used to prepare low density polyethylene (LDPE), produce polymers having extremely high levels of LCB. For example, the resin NA952 in Table I of Doerpinghaus and Baird is a LDPE prepared by a free radical process, and, according to Table II, contains 3.9 LCB/1000 carbon atoms. Ethylene/ .alpha.-olefins (ethylene-octene copolymers), available from The Dow Chemical Company (Midland, Mich., USA), that are considered to have average levels of LCB, include resins Affinity PL1880 and Affinity PL1840 and contain 0.018 and 0.057 LCB/1000 carbon atoms, respectively.

There are various methods that can be used to define the degree of LCB in a molecule such as Processing Rheology ratio ("PRR"), which uses interpolymer viscosities to calculate estimated levels of LCB in a polymer.

Interpolymer viscosity is conveniently measured in poise (dyne-second/square centimeter (d-sec/cm²)) at shear rates within a range of 0.1-100 radian per second (rad/sec) and at 190°C under a nitrogen atmosphere, using a dynamic mechanical spectrometer (such as a RMS-800 or ARES from Rheometrics), under a dynamic sweep made from 0.1 to 100 rad/sec. The viscosities at 0.1 rad/sec and 100 rad/sec may be represented, respectively, as V_{0.1} and V₁₀₀, with a ratio of the two referred to as RR and expressed as V_{0.1}/V₁₀₀.

For some applications the ethylene/α-olefin interpolymer has a PRR from 4 to 70, preferably from 8 to 70, more preferably from 12 to 60, even more preferably from 15 to 55, and most preferably from 18 to 50. The PRR value is calculated by the formula: PRR=RR+[3.82-interpolymer Mooney viscosity(ML₁₊₄ at 125°C)] x 0.3 (Eq. 1); PRR determination is described in USP 6,680,361.

In another embodiment of the invention, especially for applications requiring improved melt strength of the polyolefin, the ethylene/α-olefin interpolymers have a melt strength (MS) of 5 cN or greater, typically 6 cN or greater, and more typically 7 cN or greater. Melt strength as here used is a maximum tensile force in cN measured on a molten filament of a polymer melt, extruded from a capillary rheometer die at a constant shear rate of 33 reciprocal seconds (sec⁻¹), while the filament is being stretched by a pair of nip rollers that are accelerating the filament at a rate of 0.24 centimeters per second (cm/sec), from an initial speed of 1 cm/sec. The molten filament is preferably generated by heating 10 grams (g) of a polymer that is packed into a barrel of an Instron capillary rheometer, equilibrating the polymer at 190°C. for five minutes (min), and then extruding the polymer at a piston speed of 2.54 cm/min, through a capillary die with a diameter of 0.21 cm and a length of 4.19 cm. The tensile force is preferably measured with a Goettfert Rheotens melt tensile tester that is located so that the nip rollers are 10 cm directly below a point at which the filament exits the capillary die.

An ethylene/α-olefin interpolymer may contain a combination of two or more embodiments as described herein.

An ethylene/α-olefin copolymer may contain a combination of two or more embodiments as described herein.

### Functionalized Ethylene-Based Polymer

Composition A comprises an anhydride-functionalized ethylene-based polymer. The functionalized ethylene-based polymer can be an ethylene-based polymer as described above grafted with the anhydride functionality.

In one embodiment, the functionalized ethylene-based polymer is shown in Structure II below: 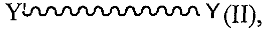 where the wavy line is a polymer chain, which may or may not be branched; and Y and Y' are each independently groups selected from hydrogen, a hydroxyl group, and an amine group, and wherein at least one of Y or Y' is a hydroxyl group and a secondary amine group.

In one embodiment, the functionalized ethylene-based polymer is shown in Structure III below: 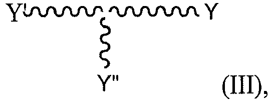 where the wavy line is a polymer chain, which may or may not be branched; and Y, Y' and Y" are each independently selected from hydrogen, a hydroxyl group, and a secondary amine group, and wherein at least one of Y, Y' or Y" is a hydroxyl group The functionalized ethylene-based polymer is a polymer comprising the following: (a) a majority weight percent polymerized ethylene, i.e., monomeric units derived from ethylene, and where the weight percent is based on the weight of the functionalized polymer, and (b) at least one polymerized comonomer or reacted functionalization agent, each containing at least one functional group.

Functionalized ethylene-based polymers comprise polar groups that serve as the functionalization moiety, i.e., a hydroxyl group (e.g., hydrolyzed PE-co-EVA), and secondary amine.

In one embodiment, the functionalized ethylene-based polymer comprises from 0.1 moles/kg to 8 moles/kg, or from 0.1 moles/kg to 5 moles/kg, or from 0.1 moles/kg to 3.5 moles/kg of hydroxyl functional groups (based on kilograms of polymer).

The amount of functional group, expressed in moles/kg, is calculated by dividing the weight of the functional group (determined from moles of functional group in the polymer; for example a titration method), per kilo of polymer, by the molecular weight of the functional group.

The amount of functional group can also be calculated by dividing the weight of the polymerized monomeric unit or reacted functionalization agent (or its reaction product such as hydrolysis product), per kilo of polymer, by the molecular weight of the polymerized monomeric unit or reacted functionalization agent (or its reaction product, such as hydrolysis product), followed by multiplying by the number of functional groups per polymerized monomeric unit or reacted functionalization agent (or its reaction product, such as hydrolysis product).

In one embodiment the functionalized ethylene-based polymer has a density from 0.86 to 0.96 g/cc, or from 0.87 to 0.95 g/cc, or from 0.88 to 0.94 g/cc.

In one embodiment the functionalized ethylene-based polymer has a melt index (I₂: 2.16 kg/190°C) from 0.5 g/10 min to 50 g/10 min, or from 1 g/10 min to 30 g/10 min.

In one embodiment, the functionalized ethylene-based polymer is PVA or EVOH.

In one embodiment, the functionalized ethylene-based polymer is a polyethylene grafted with a hydroxyl or amine containing compound such as, but not limited to, hydroxyl grafted ethylene-based polymer (for example ENGAGE 8407 used as the base polymer) and amine grafted ethylene-based polymer (for example ENGAGE 8407 used as the base polymer).

Suitable commercial functional olefin-based polymers include EVAL F101 (EVOH) polymers available from Kuraray;

A functionalized ethylene-based polymer may comprise a combination of two or more suitable embodiments as described herein.

### Additives

In one embodiment an inventive composition comprises at least one additive. Suitable additives include, but are not limited to, fillers, antioxidants, UV stabilizers, foaming agents, flame retardants, colorants or pigments, anti-blocking agents, slip-agents, and combinations thereof.

Antioxidants include, but are not limited to, hindered phenols; bisphenols; and thiobisphenols; substituted hydroquinones; tris(alkylphenyl)phosphites; dialkylthio-dipropionates; phenylnaphthylamines; substituted diphenylamines; dialkyl, alkyl aryl, and diaryl substituted p-phenylene diamines; monomeric and polymeric dihydroquinolines; 2-(4-hydroxy-3,5-t-butylaniline)-4,6-bis(octylthio)-1,3,5-triazine; hexahydro-1,3,5-tris-β-(3,5-di-t-butyl-4-hydroxyphenyl)propionyl-s-triazine; 2,4,6-tris(n-1,4-dimethylpentyl-phenylene-diamino)-1,3,5-triazine; and tris-(3,5-di-t-butyl-4-hydroxybenzyl)isocyanurate.

### Polyurethane

Composition B comprises at least one isocyanate. In one embodiment, Composition B comprises a thermoset polyurethane comprising at least one isocyanate. The polyurethane of this invention has no limitation in respect of its formulation other than it is thermosetting in nature. US 2010/0143651 A1 teaches that polyolefin blends with at least one amine, hydroxyl, imide anhydride or carboxylic acid functionalized polymer improves adhesion between the polyolefin and a thermoplastic polyurethane (TPU). Thermoplastic polyurethanes are prepared from substantially difunctional ingredients, for example, organic diisocyanates and components being substantially difunctional in active hydrogen containing groups. However, sometimes minor proportions of ingredients with functionalities higher than two may be employed. Furthermore, nearly stoichiometric equivalents of isocyante and hydroxyl groups are used to make TPU's (Encyclopedia of Polymer Science and Engineering, Wiley, 1988, Vol. 13, p. 275-276;). The reactive chemistry takes place when the TPU's are made. So, they contain little or no unreacted isocyanate. TPU's are solids at room temperature, but will become soft and workable on heating. They may be milled, injection molded (Kolycheck E. G.; US 3, 493, 634) or cast as a soft film on heating. (Agger, R. T.; Taylor J. R., and Cosby A. H. US 5,068,143).

Since TPU's are substantially linear polymers with little branching or crosslinking, they generally will have low heat, chemical and solvent resistance. On the other hand, thermosetting polyurethanes often contain components with functionality greater than two and often employ an excess of isocyanate over polyol or other reactive functional groups. Thermosetting polyurethanes cannot be milled or molded under heat. They are more versatile and can be formulated to have good heat and chemical resistance (Doyle, E. N.; The Development and Use of Polyurethane Products, McGraw-Hill, 1971, p. 323,).

Polyurethane adhesives used for laminating flexible films for packaging generally require resistance to heat, water, oils, water, mild acids, solvents, etc. So, they are thermosetting polyurethanes. The thermosetting polyurethane laminating adhesives are applied neat as low viscosity liquids (250-30,000 MPa at 25°C) or in solvents such as ethyl acetate. They are usually two-component systems where one component is a multifunctional isocyanate or NCO terminated prepolymer and the second component is a multifunctional polyol. Amines or other groups that react with isocyanates may be employed to some extent.

The curing reaction which builds the high molecular weight polyurethane occurs after the two adhesive components are applied to the film substrate and the two films are nipped together. The commercial adhesives are formulated so that there will be a substantial excess of isocyanate over hydroxyl. So, the reaction of water with the excess isocyanate and subsequent formation of amine and urea crosslinks is an essential part of the curing process. Aromatic isocyanates are widely used in packaging adhesives. During the time required to complete curing, aromatic amines formed from the reaction of isocyanates with water in film layer B could migrate through the polyolefin sealant (film layer A) and contaminate the packaged ingredients with hazardous primary aromatic amine (PAA). As mentioned earlier, the presence of OH functionality in the polyolefin sealant layer was surprisingly effective in reducing the time to complete the curing reaction and the PAA detected.

Preferred polyurethanes MOR-FREE 698A and co-reactant MOR-FREE C-79 (100:50) (a two-part solventless PU adhesive available from Rohm and Haas), and ADCOTE 536A (a two-component, solvent-based adhesive with an isocyanate component available from The Dow Chemical Company).

The polyurethane component of the blends used in the practice of the embodiments may contain a combination of two or more suitable embodiments as described.

If desired, the polyurethanes can have incorporated in them, at any appropriate stage of preparation, additives such as pigments, fillers, lubricants, stabilizers, antioxidants, coloring agents, fire retardants, catalysts or adhesion promoters which are commonly used in conjunction with polyurethane adhesives.

### Multilayer Film

An inventive multilayer film comprises at least two layers, as discussed above. In one embodiment, the multilayer film comprises at least three layers: film layer A2 joined to substrate layer C by adhesive layer B.

In one embodiment, Film layer A2 is formed from a composition A2 comprising an ethylene-based polymer blended with an anhydride functional ethylene-based polymer. Adhesive layer B comprises a PU adhesive that contains at least one isocyanate group. Substrate layer C comprises anything to which the PU adhesive will adhere, e.g., a plastic film, metal foil, paper, etc..

### Definitions

Unless stated to the contrary, implicit from the context, or customary in the art, all parts and percentages are by weight and all test methods are current as of the filing date of this disclosure.

"Composition", "formulation" and like terms means a mixture or blend of two or more components. In the context of a mix or blend of materials from which a film layer is fabricated, the composition includes all the components of the mix, e.g., polymers additives, fillers, etc.

"Polymer" and like terms mean a compound prepared by polymerising monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined below.

"Interpolymer" and like terms mean a polymer prepared by the polymerization of at least two different types of monomers. The generic term interpolymer thus includes copolymers (employed to refer to polymers prepared from two different types of monomers), and polymers prepared from more than two different types of monomers.

"Ethylene-based polymer" and like terms mean a polymer that comprises, in polymerized form, a majority amount of ethylene monomer (based on the weight of the polymer), and optionally may comprise one or more comonomers.

"Ethylene/α-olefin interpolymer" and like terms mean an interpolymer that comprises, in polymerized form, a majority amount of ethylene monomer (based on the weight of the interpolymer), and at least one α-olefin.

"Ethylene/α-olefin copolymer" and like terms mean a copolymer that comprises, in polymerized form, a majority amount of ethylene monomer (based on the weight of the copolymer), and an α-olefin, as the only two monomer types.

"Functionalized polymer" and like terms mean a polymer that comprises, linked by a covalent bond, a chemical group (chemical substituent) comprising at least one heteroatom. A heteroatom is defined as an atom which is not carbon or hydrogen. Common heteroatoms are oxygen, nitrogen, sulfur, and phosphorus.

"Functional group" and like terms mean a chemical substituent containing at least one heteroatom.

"Polymerized monomeric unit comprising a functional group (for example, copolymerized acrylic acid, and copolymerized maleic anhydride)" and like terms mean a chemical unit in a (co/inter)polymer that consists of a polymerized functional comonomer, which was used in the polymerization reaction, and which comprises a functional group as defined above. The functional group may have been modified during or after the polymerization reaction (for example: hydrolysis of a maleic anhydride unit to form a dicarboxylic acid).

"Reacted functionalization agent comprising a functional group (for example, MAH-grafted to polymer, terminal amino group)" and like terms mean a chemical unit containing a functional group, as defined above, and which was not part of a polymerized monomeric unit. This includes graft copolymers, for example the succinic anhydride unit of PE-g-MAH, and terminally functionalized (co)polymers such as the terminal amino group of polyoxyalkyleneamine. The functional group may have been modified during or after the functionalization reaction (for example: hydrolysis of a maleic anhydride unit to form a dicarboxylic acid).

"Isocyanate-containing compound" and like terms mean an organic compound or polymer containing at least one isocyanate group.

"Hydroxyl-functionalized ethylene-based polymer" and like terms mean a polymer formed from an ethylene-based polymer and one or more other compounds in which at least one compound contains at least one hydroxyl group.

"Amine functionalized ethylene-based polymer" and like terms mean a polymer formed from an ethylene-based polymer and one or more other compounds in which at least one compound contains an amine group.

"Secondary amine functionalized ethylene-based polymer" and like terms mean a polymer formed from an ethylene-based polymer and one or more other compounds in which at least one compound contains a secondary amine group.

"Anhydride functionalized ethylene-based polymer" and like terms mean a polymer formed from an ethylene-based polymer and one or more other compounds in which at least one compound contains an anhydride group.

"Perishable material" and like terms mean organic matter which can spoil or decay, or which has a decrease in activity of one or more of its active components over time.

"Comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

### Test Methods

### Density

Polymer density is measured in accordance with ASTM D-792.

### Melt Index

Melt index (I₂) of an ethylene-based polymer is measured in accordance with ASTM D-1238, condition 190°C/2.16 kg. Melt index (I₅) of an ethylene-based polymer is measured in accordance with ASTM D-1238, condition 190°C/5.0 kg. Melt index (I₁₀) of an ethylene-based polymer is measured in accordance with ASTM D-1238, condition 190°C/10.0 kg. High load melt index (I₂₁) of an ethylene-based polymer is measured in accordance with ASTM D-1238, condition 190°C/21.0 kg.

The following examples illustrate, but do not, either explicitly or implicitly, limit the present invention.

### EXPERIMENTAL

### I. Materials

The following resins and films were used in the examples.

Pre-laminated film made from a polyethylene terephthalate (PET, 12 µm (micron) thick) laminated to soft lamination grade AMCOR aluminum foil (9 µm thick) with ADCOTE 550/Coreactant F (The Dow Chemical Co.). This laminated structure was obtained from AMPAC Company, Cary, IL

DOWLEX 5056NG Polyethylene Resin is a linear low density PE with a density of 0.919 g/cc and an I₂ of 1.1 g/lOmin available from The Dow Chemical Company.

ELITE 5400G is a bimodal ethylene/octene copolymer with a density of 0.92 g/cc and an I₂ of 1 g/10min, available from The Dow Chemical Company.

The OH-g-EO is a primary hydroxyl functional ethylene-based polymer as described in US 2010/0143651, with a density of 0.88 g/cc and an I₂ of 1 g/10min.

Ethylene vinyl alcohol (EVOH) is EVAL F101 from Kuraray, Japan; it contains 32 mol% of ethylene vinyl alcohol copolymer.

Polyurethane adhesive: (PU2A) MOR-FREE 698A (isocyanate terminated component) and (PU2B) MOR-FREE C79 (hydroxyl terminated component) each available from The Dow Chemical Company).

LOTADER 4210 is a random terpolymer of ethylene, butyl acrylate (6%) and maleic anhydride (MAH, 3.8%) with an I₂ of 9 g/10 min (190°C, 2.16 Kg) and a density of 0.94 g/cm³.

### II. Pre-Laminate (PE-Film) - Representative Procedure

Composition A for the PE film (two layer film) was made by dry blending ELITE 5400G and OH-g-EO and/or EVOH) under certain blend ratios. Film samples below were prepared via blown film extrusion using a small blown film line. The line is equipped with a 5.08 cm (2") diameter blown film die with approximately a 0.08 cm (0.033") die gap.

The PE films from composition A (single layer film) were fabricated by dry blending DOWLEX 5056NG and LOTADER 4210 (10wt%) by using a Colin cast film line. The films were casted at a melt temperature in the range of 200-220°C. The film thickness was 50 micrometers.

### III. Preparation of Laminate - Representative Procedure

PU Adhesive Lamination Layer Structure and Lamination Conditions are discussed below.

**Table A**

| PU Adhesive Lamination Laver Structure and Lamination Conditions | |
|---|---|
| Polyolefin (sealant) Layer | Polyolefin film layer |
| | Functionalized PE Film (composition A) |
| Polyurethane Adhesive Layer (composition B) | PU2A/PU2B adhesive layer coat wt of 2g/m² |
| "Pre-laminate" film | Aluminum foil (12 µm) |
| | ADCOTE 555/Coreactant F (PU1A/PU1B), (4.1 g/m²) |
| | PET (12 µm) |

The adhesive was diluted with ethyl acetate to about 40% solids. A wire wound rod was used to apply the adhesive to the aluminum foil side of a sheet (20 x 30 cm) of the pre-laminate film described in Table 1. A strip of paper about 5 cm wide and 20 cm long was laid across the center of the sheet, to provide an unlaminated strip area, to separate the films for the peel testing. The adhesive was applied at a coat weight of about 2.0 g/m². The polyethylene film (Composition A above) was corona treated, then laminated to the adhesive coated aluminum foil by pressing with a steel nip roll, at about 82°C (180°F). The sheets were placed between two steel plates, and stored in a sealed container flushed with dry nitrogen. At intervals specified in the tables below, three 15 mm wide strips were cut, and T-peel adhesion was tested using ASTM D1876 (ASTM International, West Conshohocken, PA, USA), with a Thwing Albert tester, at a separation speed of 10 cm/min.

The PET/A1 pre-laminate was held in the upper (fixed) jaw, and the experimental films held in the lower (moving) jaw. The test measures the force required to peel the polyolefin layer (Composition A) from the aluminum foil of the pre-laminate. The force increases as the liquid adhesive cures. When the adhesive is cured, and develops sufficient cohesive strength, the polyolefin film does not peel or separate from the foil, but the force applied causes the polyolefin film to stretch or break. T-peel bond data in the following examples are the average of the three samples.

Heat seal bonds were measured after the samples had cured for at least 7 days. This test involves cutting 25.4 mm (1") strips and heat sealing the ends of the strips together with a Sencorp 12ASL/1. Sealing conditions for PE-based laminates were 0.28 MPa (2.8 bar) at 175°C.

The strips are pulled apart by an Instron model 5569. The results indicate the strength of the seal, and the mode of failure shows whether the adhesive has sufficient adhesion and heat resistance to withstand the sealing conditions (the PE should break without delaminating).

### IV. Pouch Preparation and PAA Level Measurement

The level of primary aromatic amines (PAAs), for example MDA (methylene diphenyl diamine) and TDA (toluene diamine/methylphenylene diamine), in a food simulant was analyzed by diazotization of the PAAs, so that the concentration of PAAs could be determined colorimetrically. The aromatic amines existing in the test solution were diazotized in a chloride solution, and subsequently coupled with N-(1-naphthyl)-ethylene diamine dihydrochloride, giving a violet solution. An enrichment of the color is done with a fixed phase extraction column. The amount of the PAAs is determined photometrically at a wavelength of 550 nm. The concentration of PAAs is noted as "aniline hydrochloride equivalents," and reported as "micrograms of aniline hydrochloride per 100 ml (or 50 ml) of food-simulant per an area of 4 dm² of interior surface of pouch (sealant layer)."

Laminates were prepared as described above. Each pouch was formed by cutting a strip of about "28 cm x 16.3 cm" from the middle section (width) of the laminate. Each strip was folded to form a "14 cm x 16.3 cm" surface area, and heat sealing an edge of about 1 cm along each open longitudinal edge of the folded strip was heat sealed, to form a pouch of "14 cm x 14.3 cm" excluding the heat sealed edges. The film structure of a pouch wall, from interior layer to exterior layer, was as follows: Multi-layered film structure (interior to exterior): (PE-Film/ PU Adhesive/pre-laminate (Al-Adhesive-PET). The equipment used for heat sealing the edges was a SENCORP 12ASL/1. Sealing conditions for PE-based laminates were 0.28 MPa (2.8 bar) at 160°C.

Four pouches (two blanks and two test pouches), each with an inner surface area of about 14.0 cm x 14.3 cm were used for each inventive film in this study. Each pouch was formed after two days from the time of formation of the respective laminate. Two test pouches for each day and two blank pouches per day were prepared from each laminate. Prior to forming a pouch, the laminate was stored at room temperature under ambient atmosphere. Each pouch was filled with 100 ml of 3% aqueous acetic acid (i.e., the food simulant). These pouches were stored at 70°C, in an air circulation oven, for two hours. After cooling the test solution (contents of the pouch) to room temperature, 100 ml of test solution was mixed with 12.5 ml of hydrochloric acid solution (1N) and 2.5 ml of sodium nitrite solution (0.5 g per 100 ml of solution), and the contents were allowed to react for ten minutes. Ammonium sulfamate (5 ml; 2.5 g per 100 ml of aq. solution) was added and allowed to react for ten minutes. A coupling reagent (5 ml; 1 g of N-(1-naphtyl)-ethylenediamine dihydrochloride per 100 g of aq. solution) was added, and allowed to react for 120 minutes. After each addition, the resulting mixture was stirred with a glass rod. For the "blank pouches, 100 ml of the test solution was mixed with the derivation reagents as discussed above, except for the sodium nitrite. The solution was concentrated by elution through an ODS solid phase extraction column (ODS reverse phase, C 18 end capped), and the extinction was measured at 550 nm, using an EVOLUTION 300 Spectrophotometer (from Thermo-Fisher Company). The column was conditioned using, first, 12 ml of methanol, then 12 ml elution solvent, and then, 12 ml aqueous hydrochloric acid solution (0.1 N). Each derivative sample was added to the column using a glass beaker that was previously rinsed twice with 3 ml of aqueous hydrochloric acid solution (0.1 N). The column was subject to a vacuum (about 127 mm Hg) pull, to remove all rinse, for one minute. Then 5 ml of elution solvent was added to the column, and this step was repeated until 10 ml of eluent was collected. The extinction (absorption) of the eluent was measured in a 5 cm cuvette at 550 nm. To determine the concentration of PAA, the extinction of the reaction product was measured at 550 nm, in a 5 cm cuvette, against the reagent blank solution, and a series of standards with known concentrations of aniline hydrochloride, which were processed in parallel.

### Example 1

Laminates were made with the commercial adhesive ADCOTE 536A with and without the co-reactant ADCOTE 536B. The results of the first set of tests are shown in Table 1. Comparative Samples 1-7 were made using only ADCOTE 536A (NCO terminated) without the polyol co-reactant 536B. The purpose was to see if the functionality in the film would aid in the curing in a dry atmosphere. Samples 3, 5 & 7 with the functional films showed higher green bonds than the control film 1 with no functional additives. When the amount of EVOH in the second layer of polyethylene film was greater than or equal to 50% (samples 2, 3, and 4) or if the coextruded layer was 100% OH-g-EO (sample 6), the two layers of coextruded polyethylene film pulled apart when the T-peel or heat seal test was done. The adhesive held one layer of the polyethylene film to the aluminum foil, but the coextruded layers separated. The lower bonds at the earlier stages for films 2-4 & 6 were due to separation of the coextruded layers of polyethylene rather than failure of the adhesive. Blends of OH-g-EO (Comparative Sample 5) held together during the tests and PE peeled from the foil in the T-Peel test or the film broke (destruct) during the heat seal test. The blend OH-EO/polyethylene/EVOH (Comparative Sample 7) showed some separation of the PE layers when the peel tests were run, but the separation occurred at higher values and the heat seal bonds held (PE film broke rather than delaminated). The OH-g-EO/EVOH/PE blend gave a co-extrusion that held together. Comparative Sample number 5 (OH-g-EO/PE) layer, held together well, gave better green bonds and faster bond development than the comparative sample number 1.

**Table 1**

| Composition of Two Laver Polyethylene Blown Film Samples and Laminate Test Results | | | | | | | | |
|---|---|---|---|---|---|---|---|---|
| Sample # | 1 | 2 | 3 | 4 | 5 | 6 | 7 | 8 |
| | Comp | Comp | Comp | Comp | Comp | Comp | Comp | Comp |
| | Layer 1 | Layer 1 | Layer 1 | Layer 1 | Layer 1 | Layer 1 | Layer 1 | Layer 1 |
| | wt% | wt% | wt% | wt% | wt% | wt% | wt% | wt% |
| ELITE5400 G | 100 | 100 | 100 | 100 | 100 | 100 | 100 | 100 |
| | Layer 2 | Layer 2 | Layer 2 | Layer2 | Layer 2 | Layer 2 | Layer 2 | Layer 2 |
| | wt% | wt% | wt% | wt% | wt% | wt% | wt% | wt% |
| ELITE5400G | 100 | 50 | 0 | 0 | 50 | 0 | 34 | 100 |
| EVAL F 101 EVOH | 0 | 50 | 50 | 100 | 0 | 0 | 33 | 0 |
| OH-g-EO | 0 | 0 | 50 | 0 | 50 | 100 | 33 | 0 |
| T-peel test (N/15mm) | | | | | | | | |
| Green Bonds | 1.6 AS | 0.7 AS | 3.3 FS | 0.6 AS | 5.3 AS | 1.6 AF | 4.1 FS | 3 AS |
| 1 day | 10.9 ST | 0.9 AF | 3.4 FS | 2.9 FS | 13.4 ST | 2.4 AS | 10 FS/ST | 16.3 AT |
| 7 day | 6.1 AT | 0.6 FS | 3.2 FS | 3.5 FS | 10 ST | 2.9 AT | 6.9 FS | 13.1 AT |
| Heat Seal Test | 59.2 D | 22 FS | 39.3 FS | 17.6 FS | 62.7 D | 33.7 FS | 53.4 D | 70.4 D |

| | | | | | | | | |
|---|---|---|---|---|---|---|---|---|
| Comp - Comparative Example AT = Adhesive Transfer from primary (A1) to secondary film AF = Adhesive Fails to adhere to primary film (A1) FS = Film Split (layers of coextruded film separate, not related to adhesive) ST = Adhesive holds substrates together and PE film stretches D = Destruct, Adhesive holds films together and PE film breaks FS/ST Adhesive holds substrates together, PE stretches for some specimens and coextruded layers separate for other. | | | | | | | | |

The EVOH layer easily separated from the PE layer in Sample 2 and 4. Also, number 4 was rough and wrinkled. Films 3, 7, and 8 where the EVOH resin was blended with the OH-g-EO resin had a better appearance and better adhesion between layers.

### Example 2

Samples of films 1, 5 and 7 from Table 1 were laminated to the foil side of the PET/foil film as described above using MOR-FREE 98A with co-reactant MOR-FREE 79 commercial laminating adhesive from The Dow Chemical Company. The laminates were pressed between plates and allowed to cure at ambient conditions (not in a container under dry nitrogen). Pouches were made from the laminates and the tested for PAA migration as described above. Table 2 shows that the functionalized films 5 and 7 dramatically reduced the PAA levels detected at 2, 3 and 7 days.

**Table 2**

| PAA* Decay Data for OH Functional PE Based Experimental Films | | | | | |
|---|---|---|---|---|---|
| Sample Number | PE film Description | OH group type | PAA after 2 day | PAA after 3 day | PAA after 7 day |
| 1 | Control PE (Elite 5400g) | None | 20.25 | 8.32 | 0.66 |
| 5 | PE/OH-g-EO (1:1) | Primary | 4.98 | 0.95 | 0.37 |
| 7 | PE/EVOH/OH-g-PE(1:1:1) | Secondary and primary | 4.97 | 0.92 | 0.28 |

| | | | | | |
|---|---|---|---|---|---|
| *PAA reported as µg Aniline HCl/100 mL | | | | | |

Another set of laminates was made and tested as described above. This set included anhydride functional PE (LOTADER 4210). The results summarized in Tables 3 show that both OH and anhydride functionality give faster reduction of PAA in the extract. The anhydride shows lower PAA in the early days, but the OH functional resin gives better results at longer time (9 days). Both functional films give acceptable peel results. See Table 3.

**Table 3**

| Laminate T-Peel Results | | | | | | | | |
|---|---|---|---|---|---|---|---|---|
| | | Functional Group content (mmol/100g) | | PAA (µg Aniline HCl/100 mL | | | T-peel N/15 mm | |
| Sample Number | Description | | | 2 day | 3 day | 9 day | 1 day | 7 day |
| 1 | ELITE 5400G (control) | 0 | | 17.5 | 7.3 | 0.58 | 4.4 | 3.6 |
| 5 | ELITE 5400G/50% OH-g-EO | 2.7 | | 4.9 | 1.4 | 0.48 | 2.2 | 3.1 |
| | DOWLEX 5056 (control) | | 0 | 11.6 | 4.9 | 0.54 | 6.2 | 6.2 |
| | DOWLEX5056/10% LOTADER 4210 | | 3.6 | 1.8 | 1.4 | 0.9 | 4.3 | 5.5 |

| | | | | | | | | |
|---|---|---|---|---|---|---|---|---|
| *DOWLEX 5056 is a linear low density polyethylene. | | | | | | | | |

## Claims

1. A multilayer film comprising at least two layers A2 and B:
A2. A first film layer A2 formed from a composition A2 comprising an anhydride functionalized ethylene-based polymer and a linear low density polyethylene; and
B. A second film layer B formed from a composition B comprising at least one isocyanate.

2. The multilayer film of Claim 1, wherein the Layer A2 is in contact with Layer B.

3. The multilayer film of any of Claims 1-2, in which the anhydride functionalized ethylene-based polymer of composition A2 is formed from an ethylene/α-olefin interpolymer.

4. The multilayer film of any of Claims 1-3, in which the anhydride functionalized ethylene-based polymer of composition A2 further comprises an imide group.

5. The multilayer film of any of Claims 1-4, in which composition A2 further comprises an EVOH.

6. The multilayer film of any of the previous claims, in which film layer B comprises a two component polyurethane (PU) adhesive.

7. The multilayer film of any of the previous claims, further comprising a film layer C that is in contact with film layer B.

8. An article comprising the multilayer film of any of the previous claims.

## Patentansprüche

1. Eine Mehrschichtfolie, die mindestens zwei Schichten A2 und B beinhaltet:
A2. eine erste Folienschicht A2, gebildet aus einer Zusammensetzung A2, die ein funktionalisiertes Anhydridpolymer auf Ethylenbasis und ein lineares Polyethylen niederer Dichte beinhaltet; und
B. eine zweite Folienschicht B, gebildet aus einer Zusammensetzung B, die mindestens ein Isocyanat beinhaltet.

2. Mehrschichtfolie gemäß Anspruch 1, wobei die Schicht A2 mit Schicht B in Kontakt ist.

3. Mehrschichtfolie gemäß einem der Ansprüche 1-2, wobei das funktionalisierte Anhydridpolymer auf Ethylenbasis der Zusammensetzung A2 aus einem Ethylen/α-Olefin-Interpolymer gebildet ist.

4. Mehrschichtfolie gemäß einem der Ansprüche 1-3, wobei das funktionalisierte Anhydridpolymer auf Ethylenbasis der Zusammensetzung A2 ferner eine Imidgruppe beinhaltet.

5. Mehrschichtfolie gemäß einem der Ansprüche 1-4, wobei die Zusammensetzung A2 ferner ein EVOH beinhaltet.

6. Mehrschichtfolie gemäß einem der vorhergehenden Ansprüche, wobei die Folienschicht B ein Zwei-Komponenten-Polyurethan(PU)-Klebemittel beinhaltet.

7. Mehrschichtfolie gemäß einem der vorhergehenden Ansprüche, ferner beinhaltend eine Folienschicht C, die mit der Folienschicht B in Kontakt ist.

8. Ein Artikel, der die Mehrschichtfolie gemäß einem der vorhergehenden Ansprüche beinhaltet.

## Revendications

1. Un film multicouche comprenant au moins deux couches A2 et B :
A2. Une première couche de film A2 formée à partir d'une composition A2 comprenant un polymère à base d'éthylène fonctionnalisé anhydride et un polyéthylène basse densité linéaire ; et
B. Une deuxième couche de film B formée à partir d'une composition B comprenant au moins un isocyanate.

2. Le film multicouche de la revendication 1, où la Couche A2 est en contact avec la Couche B.

3. Le film multicouche de n'importe lesquelles des revendications 1 à 2, dans lequel le polymère à base d'éthylène fonctionnalisé anhydride de la composition A2 est formé à partir d'un interpolymère éthylène/α-oléfine.

4. Le film multicouche de n'importe lesquelles des revendications 1 à 3, dans lequel le polymère à base d'éthylène fonctionnalisé anhydride de la composition A2 comprend en sus un groupe imide.

5. Le film multicouche de n'importe lesquelles des revendications 1 à 4, dans lequel la composition A2 comprend en sus un EVOH.

6. Le film multicouche de n'importe lesquelles des revendications précédentes, dans lequel la couche de film B comprend un adhésif polyuréthanne (PU) bi-composant.

7. Le film multicouche de n'importe lesquelles des revendications précédentes, comprenant en sus une couche de film C qui est en contact avec la couche de film B.

8. Un article comprenant le film multicouche de n'importe lesquelles des revendications précédentes.
